(19) Europäisches Patentamt
European Patent Office
Office européen des brevets

(11) Veröffentlichungsnummer: **0 324 353 B1**

# (12) EUROPÄISCHE PATENTSCHRIFT

(45) Veröffentlichungstag der Patentschrift: **04.09.91 Patentblatt 91/36**

(51) Int. Cl.$^5$: **C08L 27/06**, C08L 75/04, // (C08L27/06, 75:04), (C08L75/04, 27:06)

(21) Anmeldenummer: **89100060.6**

(22) Anmeldetag: **04.01.89**

## (54) Thermoplastische Formmassen auf Basis von PVC und einem Poly-alpha-olefin/Polyurethan-Blockcopolymerisat.

(30) Priorität: **13.01.88 DE 3800684**

(43) Veröffentlichungstag der Anmeldung: **19.07.89 Patentblatt 89/29**

(45) Bekanntmachung des Hinweises auf die Patenterteilung: **04.09.91 Patentblatt 91/36**

(84) Benannte Vertragsstaaten: **DE FR GB IT NL SE**

(56) Entgegenhaltungen:
**DE-A- 3 622 825**
**GB-A- 909 704**
**US-A- 4 212 957**

(73) Patentinhaber: **BAYER AG**
**W-5090 Leverkusen 1 Bayerwerk (DE)**

(72) Erfinder: **Meier, Lothar, Dr.**
**Buchenstrasse 31b**
**W-4322 Sprockhövel 2 (DE)**
Erfinder: **Gärtner, Maria**
**Auf der Höhe 82**
**W-5060 Bergisch-Gladbach 1 (DE)**
Erfinder: **Meurer, Kurt Peter, Dr.**
**Am Krahfeld 1**
**W-5330 Königswinter 21 (DE)**
Erfinder: **Franke, Joachim, Dr.**
**An der Ruthen 2**
**W-5000 Köln 80 (DE)**
Erfinder: **Lindner, Christian, Dr.**
**Riehler Strasse 200**
**W-5000 Köln 60 (DE)**

EP 0 324 353 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft thermoplastische Formmassen aus PVC und Poly-α-olefin/Polyurethan-Blockcopolymeren, die hergestellt werden aus gegenüber Isocyanatgruppen reaktionsfähigen, funktionalisierten Poly-($C_2$-$C_{10}$-α-olefinen), vorzugsweise Polypropylen, Di- oder Polyisocyanaten oder Isocyanatprepolymeren sowie gegebenenfalls höhermolekulare Polyole und/oder niedermolekulare Kettenverlängerer.

PVC wird bekanntlich häufig mit speziellen Modifikatoren, Weichmachern und Additiven modifiziert, um vielseitig verwendungsfähige Thermoplastformmassen zu erhalten. Weiche PVC- Formmassen erhält man z.B. unter Verwendung spezieller Polymerweichmacher wie Polyadipaten, Polyphthalaten, thermoplastischen Polyurethanen usw. Diese Weichmacher haben im allgemeinen eine besonders niedrige Migrationstendenz.

Es wurde nun gefunden, daß erfindungsgemäß spezielle Blockcopolymerisate mit PVC mischbar und verträglich sind und in der Abmischung weiche, kältefeste Formmassen mit hohem Weiterreißwiderstand bilden. Diese Formmassen sind öl-, fett- und benzinbeständig, bitumenbeständig, extraktionsbeständig, migrationsbeständig, abriebfest und nicht flüchtig. Über die Variation der Blockcopolymerzusammensetzung und dem Mischungsverhältnis mit PVC lassen sich Formmassen mit gezielt eingestelltem Eigenschaftsniveau herstellen, z.B. Folienmaterialien mit hoher Festigkeit und Dehnung, die sich über Kalanderprozesse und/oder Slush-moulding-Verfahren verarbeiten lassen. Die erfindungsgemäßen Formmassen besitzen somit eine besonders umfangsreiche Kombination guter Eigenschaften i.Vgl. zu anderne bekannten PVC-Modifikatoren.

Gegenstand der Erfindung sind daher thermoplastische Formmassen aus PVC und einem Blockcopolymerisat, dadurch gekennzeichnet, daß das Blockcopolymerisat ein Poly-α-olefin/Polyurethan-Blockcopolymerisat (PAO/PU) ist und hergestellt wird aus

A. gegenüber Isocyanaten reaktionsfähigen, funktionalisierten Poly($C_2$-$C_{10}$-α-olefinen) mit einem Molekulargewicht $M_w$ von 1.000 bis 350.000,

B. organischen Di- oder Polyisocyanaten oder modifizierten Polyisocyanaten sowie Isocyanat-prepolymeren, bevorzugt der Funktionalität 2
sowie gegebenenfalls aus

C. gegenüber Isocyanaten reaktiven Zerewitinoff-aktive Wasserstoffatome enthaltenden Polyden, z.B, an sich bekannten Synthesebausteinen der Polyurethan/-Polyharnstoff-Chemie, wie Polyetherpolyolen, Polyesterpolyolen, Polycarbonatpolyolen, Polylacetonen, Aminogruppen enthaltene modifizierten Polyolen mit Molekulargewichten von 400-5000, besonders bevorzugt difunktionelle Bausteine,
sowie gegebenfalls aus

D. niedermolekularen als Kettenverlängerer fungierenden Verbindungen mit Molekulargewichten 62 bis 399, wie organischen Di- oder Polyhydroxyverbindungen sowie di- und oligofunktionellen Aminen des Molgewichtsbereichs 32 bis 399 als Kettenverlängerungsmittel bzw. Vernetzer
wobei mindestens eine der Komponenten C. und D. enthalten sein muß.

Gegenstand der Erfindung ist Ebenfalls die Verwendung obiger Formmassen zur Herstellung von Formkörpern.

Bei den unter A) aufgeführten, gegenüber Isocyanaten reaktionsfähigen, funktionalisierten Poly(α-alkyl)-olefinen (PAO) mit einem Molekulargewichtsmittel $M_w$ von 1000 bis 350000, vorzugsweise 2000 bis 200000, insbesondere 2000 bis 100000, sind solche Polyolefine, insbesondere auf Polypropylen-Basis genannt, die funktionelle Gruppen besitzen, deren Reaktion mit Isocyanatgruppen möglich ist. Eine Übersicht findet man z.B. im Houben-Weyl, Ergänzungsband 4, Seite 768 bis 784. Vorzugsweise handelt es sich bei diesen funktionalisierten PAO um Poly-(α-alkyl)-olefin-carbonsäuren, -anhydride, -alkohole und -amine. Die Olefingruppen in A) sollen dabei 2 bis 10 C-Atome, vorzugsweise 2 C-Atome und die Alkylgruppen 1 bis 8 C-Atome, vorzugsweise 1 C-Atom, aufweisen.

Funktionalisierte PAO sind im Prinzip bekannt. So können Carbonsäuregruppen enthaltende Polypropylene nach den US-Patenten 3416990, 3437550, 3483276 dadurch erhalten werden, daß kristallines oder amorphes Polypropylen mit einer ethylenisch ungesättigten Carbonsäure, Polycarbonsäure oder -anhydrid, -amid oder -alkylester modifiziert wird.

Beispiele für solche Säuren oder Anhydride sind Maleinsäure, Fumarsäure, Itaconsäure, Acrylsäure, Methacrylsäure, Crotonsäure, Maleinsäureanhydrid, Itaconsäureanhydrid.

Bevorzugt wird Maleinsäureanhydrid verwendet, um z.B. maleiniertes amorphes oder isotaktisches Polypropylen zu erhalten.

Ein Beispiel für ein kristallines, carboxyliertes Polypropylen-Polymer, welches in dieser Erfindung verwendet werden kann, ist Hercoprime® G, (Handelsprodukt von Hercules, Inc. Bloomington, Delaware 19899).

Ein Beispiel für ein amorphes carboxyliertes Polypropylen-Polymer ist Epolene® E 43, (Handelsprodukt von Tennessee-Eastman Company, Tennessee).

Eine weitere Methode, funktionalisierte Polyolefine zu erhalten, ist in der deutschen Patentanmeldung P 3618378.4 beschrieben.

Dort wird ein Verfahren zur Herstellung von Poly-($C_2$-$C_{10}$-α-alkyl-olefin)-dicarbonsäuren mit Molekulargewichten $M_w$ von 70000 bis 350000, vorzugsweise von 70000 bis 100000 und insbesondere von 70000 bis 80000 angegeben, bei dem Poly-($C_2$-$C_{10}$-α-olefine) mit $M_w$ von etwa 355000 und einer Uneinheitlichkeit von etwa 10 (Uneinheitlichkeit $U = M_w/M_n - 1$) oxidativ bei Temperaturen von 200°C bis 300°C behandelt und gegebenenfalls abgebaut werden.

Beispielsweise kann in einem Extruder (ZSK 32) mit einem Länge-Durchmesserverhältnis von LD = 40/6000 g/Std. isotaktisches Polypropylen mit einem $M_w$ von 355000, einer Uneinheitlichkeit ($U = M_w/M_n - 1$) von 9,4 zudosiert, auf 250°C bis 260°C erhitzt und mit 1500 Nl/Std.

Luft unter Druck vermischt werden, wobei nach der Zone der Luftdosierung die Zylindertemperatur des Extruders auf 210°C gehalten wird ($M_w$ = Molekulargewicht-Gewichtsmittel ; $M_n$ = Molekulargewicht-Zahlenmittel).

In der Entgasungszone tritt die überschüssige Luft aus, und die erhaltene Polypropylencarbonsäure wird an der Düse abgesponnen. Nach dieser ersten Oxidation besitzt die resultierende Polypropylencarbonsäure ein $M_w$ von etwa 113000, einer Uneinheitlichkeit von 4,17 und einen Carboxylgruppengehalt von 0,7 Carboxylgruppen pro Molekül.

Dieses Produkt kann nochmals in derselben Weise oxidativ extrudiert werden, wobei die resultierende Polypropylencarbonsäure ein $M_w$ von 94000, eine Uneinheitlichkeit von 3,1 und einen Carboxylgruppengehalt von 1,3 Carboxylgruppen pro Molekül hat.

Dieses Produkt kann ein drittes Mal oxidativ extrudiert werden, wobei die resultierende Polypropylencarbonsäure ein $M_w$ von 70000, eine Uneinheitlichkeit von 4,3 und einen Carboxylgruppengehalt von 1,5 bis 2 Carboxylgruppen pro Molekül zeigt.

Die Bestimmung der Carboxylgruppen erfolgt beispielsweise jeweils durch acidimetrische Titration mit einer methanolischen Kaliumhydroxidlösung.

Der Ausdruck Nl/Std. Luft bedeutet Normliter/Stunde.

Als Drücke bei der oxidativen Extrusion sind vorzugsweise solche von 1 bar bis 100 bar bevorzugt anwendbar.

Diese Oxidationsverfahren nach der Patentanmeldung P 3618378.4 zu Polyolefincarbonsäuren können auch in einem Kneter bei Temperaturen von 150°C bis 300°C und Reaktionszeiten von 1 bis 1000 min, vorzugsweise von 10 bis 1000 min und Luft-Durchsätzen von 10 bis 1000 l/h und Drücken von 1 bis 100 bar durchgeführt werden.

Ebenfalls Gegenstand der zitierten Anmeldung ist ein weiterer Verfahrensvorschlag zur Herstellung von Poly-($C_2$-$C_{10}$-(α-alkyl)-olefin)-carbonsäuren, dadurch gekennzeichnet, daß man $C_2$-$C_{10}$-Olefine mit bekannten metallorganischen Mischkatalysatoren, beispielsweise mit $V(acetylacetonat)_3/Al(Cl)(C_2H_5)_2$ in bekannter Weise zu Molekulargewichten $M_w$ von etwa 50000 bis etwa 350000 polymerisiert und anschließend mit $CO_2$ bei Temperaturen von −50°C bis −70°C und einer Reaktionszeit von 6 bis 20 Stunden bei einem $CO_2$-Druck bis zu 5 bar behandelt, das Reaktionsgemisch danach mit wäßriger Säure ansäuert und die erhaltene Polyolefincarbonsäure abtrennt.

Diese PAO-Carbonsäuren oder PAO-Carbonsäureanhydride können nun direkt mit Isocyanatgruppen in Reaktion gebracht werden.

Die Reaktion von Isocyanatgruppen mit niedermolekularen Carbonsäuren oder Carbonsäureanhydriden ist im Prinzip bekannt, so z.B. bei R.L. Zapp, G.E. Serniuk, K.S. Minckler, Rubber Chem. Technol. 43, 1154 (1970) ; S. Motoki, T. Saito, H. Kagami, Bull, Chem. Soc. Jpn. 47, 775 (1974) ; C. Naegli, A. Tyabij, Helv. Chim. Acta. 17, 931 (1934) beschrieben.

Man erhält je nach der Reaktionsführung entweder Hydroxamsäureanhydride (Formel I)

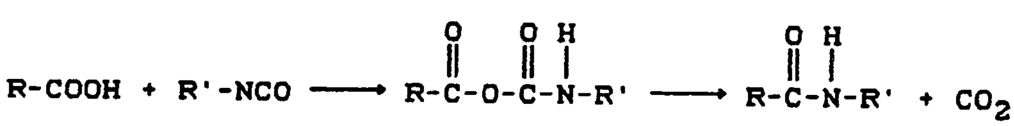

(I) (II)

oder unter $CO_2$-Austritt, Amidverknüpfung (Formel II).

Die Reaktion von funktionalisiertem PAO mit Mono- oder Polyisocyanaten oder Isocyanatprepolymeren zu Isocyanatgruppen enthaltendem PAO und die daraus resultierende Darstellung von PAO/PU-Blockcopolymeren mit den erfindungsgemäß vorteilhaft zu erzielenden Eigenschaften ist neu.

Die oben erwähnten PAO-Carbonsäuren oder PAO-Carbonsäureanhydride können aber auch zunächst durch an sich bekannte, an diesem funktionalisierten PAO allerdings neuen, organisch-chemischen Reaktionen in andere, mit Isocyanat-Gruppen reaktive Gruppen überführt werden.

Beispielsweise sei hier genannt, ohne erfindungsgemäß einschränkend zu gelten, die Überführung in Alkohol-, Amino-, Epoxid- Gruppen.

Diese Umwandlung der Carbonsäuregruppen oder Anhydridgruppen kann entweder direkt durch Oxidation, Reduktion oder Umlagerung in andere, mit NCO-reaktiven Gruppen erfolgen oder durch Umsetzung der Carbonsäure- oder Anhydrid-Gruppen mit anderen, nieder- oder höhermolekularen, mindestens bifunktionellen Verbindungen der allgemeinen Formel

$$A_n\text{-}R\text{-}B_m$$

worin

R ein organischer, z.B. aliphatischer, aromatischer oder aliphatisch-aromatischer Alkyl-, Aralkyl- oder Aryl-Rest mit einem Molekulargewicht von 14 bis 1000 bedeutet, und

A eine funktionelle Gruppe, die zu einer Reaktion mit Carbonsäure-Gruppen oder Anhydrid-Gruppen befähigt ist, wie z.B. Hydroxyl- oder Aminogruppen und somit zu Ester-, Amid- oder Imid-Bindungen führt,

B eine funktionelle Gruppe, die zu einer Reaktion mit Isocyanat-Gruppen befähigt ist. Eine Übersicht findet man z.B. im Houben-Weyl E 4, Seiten 768 bis 784. Vorzugsweise handelt es sich um Hydroxy-, Amino-, Thio- und Epoxid-Gruppen-

und

$$n \geq 1,$$

sowie

$$m \geq 1.$$

Beispiele solcher Verbindungen sind Di- oder Polyole und/oder Aminoalkohole wie Ethylenglykol, Butandiol-1,4, 2,2-Dimethylpropandiol-1,3, Ethanolamin, Diethanolamin, usw.

Für eine erfolgreiche Durchführung dieser Reaktion kann es notwendig sein, die Reaktivität der Polyolefin-Carbonsäure-Gruppen zu erhöhen. Hier kommen alle in der organischen Chemie üblichen und verwendeten Aktivierungsreagenzien in Frage. Bevorzugt ist die Überführung in Carbonsäurehalogenide, besonders bevorzugt in Carbonsäurechloride.

Diese Polyolefin-Carbonsäurechloride können nach der bereits zitierten deutschen Anmeldung (P 3618378) erhalten werden, indem Polyolefin-Carbonsäuren mit einem $M_n$ von 1000 bis 350000 mit Halogenierungsmitteln, vorzugsweise mit Chlorierungsmitteln, z.B. mit Thionylchlorid, gegebenenfalls in einem organischen Lösungsmittel, beispielsweise in aliphatischen, cycloaliphatischen oder aromatischen Lösungsmitteln, umgesetzt werden.

Organische Lösungsmittel sind bevorzugt halogenierte oder alkylierte aromatische Kohlenwasserstoffe wie Toluol oder Chlorbenzol.

Bei Abwesenheit der Lösungsmittel erfolgt die Halogenierung in Substanz, wobei eine Suspension der Carbonsäure im Halogenierungsmittel vorliegt.

Zur Umsetzung mit den erfindungsgemäßen PAO/PU-Blockcopolymeren A) geeignete organische Polyisocyanate B) sind beliebige organische Verbindungen, die mindestens zwei freie Isocyanatgruppen aufweisen. Vorzugsweise werden Diisocyanate $X(NCO)_2$ eingesetzt, wobei X insbesondere einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger besonders bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methylcyclohexan, 4,4'-Methylenbis-cyclohexyl-diisocyanat, 4,4'-Diisocyanato-dicyclohexylpropan-(2,2), 1,4-Diisocyanatobenzol, 2,4-Diisocyanatotoluol, 2,6-Diisocyanatotoluol, sowie deren Isomerengemische, 4,4'-Diisocyanato-diphenylmethan, p-Xylylendiisocyanat, sowie $\alpha,\alpha,\alpha',\alpha'$-Tetramethyl-m-

oder p-Xylylendiisocyanat, aus dieser Verbindungen bestehende Gemische, da hieraus thermoplastisch verarbeitbare Blockcopolymere entstehen.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig oder allein (mit) zuverwenden.

Bei den für die Herstellung der erfindungsgemäßen PAO/PU-Blockcopolymere als Ausgangsmaterial C) geeigneten, gegenüber Isocyanaten rekativen, Zerewitinoff-aktive Wasserstoffatome enthaltende Polyole handelt es sich um an sich bekannte Synthesebausteine der Polyurethan/Polyharnstoffchemie wie Polyetherpolyole, Polyesterpolyole, Polycarbonatpolyole, Polylactone, Amino-Gruppen enthaltene modifizierte Polyole mit einem Molgewicht von 400 bis 5000, wobei auch hier Bifunktionalität besonders bevorzugt ist.

Bei den für die erfindungsgemäßen PAO/PU-Blockcopolymere als Ausgangsmaterial D) geeigneten, als Kettenverlängerer fungierenden Verbindungen, handelt es sich um organische Polyhydroxyverbindungen mit einem Molekulargewicht von 62 bis 399 einsetzbar.

Es handelt sich hierbei um besonders bevorzugt bifunktionelle Kettenverlängerer des Molekulargewichtsbereichs von 62 bis 399, vorzugsweise 62 bis 250, während 3-funktionelle Kettenverlängerer weniger bevorzugt sind. Sie können jedoch in untergeordneten Mengen mitverwendet werden.

Hierzu gehören beispielsweise einfache, mehrwertige Alkohole wie Ethylenglykol, Propylenglykol, Propandiol-(1,3), Butandiol-1,4, Hexandiol-1,6, Trimethylolpropan oder Glycerin. Auch niedermolekulare Polyesterdiole wie z.B. Adipinsäure-bis-(hydroxyethyl)-ester oder niedermolekulare, Ethergruppen aufweisende Diole wie. z.B. Diethylenglykol, Triethylenglykol, Tetraethylenglykol, Dipropylenglykol, Tripropylenglykol oder Tetrapropylenglykol sowie di- oder oligofunktionelle Amine des Molekulargewichtsbereiches von 32 bis 399 als Kettenverlängerer und Vernetzer.

Verbindungen vom Typ C) und D) sind ausführlich in der DE-A 2832253, Seite 11 bis 20 aufgeführt.

Diese PAO/PU-Blockcopolymere können in beliebigem Mischverhältnis zu handelsüblichem PVC zugesetzt werden und bilden verträgliche nahezu homogene Formmassen.

Die PAO/PU-Blockcopolymerisate und ihre Herstellung wird in der DE-OS 3622825 beschrieben. Diese Produkte wurden aber bislang nicht als Modifikator für PVC eingesetzt.

Den erfindungsgemäßen Formmassen können nach Bedarf für PVC übliche Modifiaktoren zugesetzt werden, um z.B. bestimmte mechanische Eigenschaften oder die Wärmeformbeständigkeit usw. zu verbessern. Ferner können die für die PVC-Verarbeitung bekannten Additive wie z.B. Weichmacher, Fließhilfen, Flammschutzmittel, Stabilisatoren, Bläuungsmittel, Pigmente zugesetzt werden.

Als PVC-Komponente können erfindungsgemäß handelsüblichen PVC-Typen, vorzugsweise solche mit einem K-Wert 30-100 eingesetzt werden.

Die Compoundierung der erfindungsgemäßen Formmassen kann auf den in der PVC-Technologie üblichen Mischaggregaten erfolgen. Die Formmassen können durch Walzen, Pressen, Extrudieren, Spritzgießen, Kalandrieren, Sinterverfahren, wie. z.B. slush-moulding und andere übliche Verfahren, im Temperaturbereich von z.B. 150-220°C hergestellt werden.

## Beispiele

A. Herstellung der PAO/PU-Blockcopolymere (z.B. DE-OS 3622825)

### Beispiel 1

Herstellung der Polypropylen(PP)-Carbonsäuren (nach der deutschen Patentanmeldung P 3618378.4).

In einem Extruder (ZSK 32) mit einem Längs-Durchmesser-Verhältnis LD = 40 werden 6.000 g/h isotaktisches Polypropylen mit einem mittleren Molekulargewicht von 340.000 eindosiert, auf 250 bis 260°C erhitzt und mit 1.500 NL/h Luft unter Druck vermischt. (NL/h bedeutet Normliter pro Stunde).

Nach der Zone zur Luftdosierung wird die Zylindertemperatur des Extruders auf 210°C gehalten. In der Entgasungszone tritt die überschüssige Luft aus, und das abgebaute Polypropylen wird an der Düse abgesponnen.

Man erhält carboxyfunktionalisiertes Polypropylen mit einem Molekulargewicht von ca. 4.000 und einer Funktionalität von ca. 2. Die Säurezahl beträgt demnach ca. 28 mg KOH/g Substanz.

Beispiel 2

Allgemeines Verfahren (gemäß Tabelle 1)

Die Polypropylen-Carbonsäure des Beispiels 1 wird unter Stickstoff bei 150-200°C aufgeschmolzen. Dann wird langsam bei dieser Temperatur die angegebene Menge Methandiphenyldiisocyanat zugegeben. Man beobachtet eine Gasentwicklung ($CO_2$), die nach 30 min bis 1 h wieder abklingt.

Nach weiteren 30 min wird der Polyester zugegeben und schnell untergerührt und die Mischung in eine Teflon-Wanne gegossen und anschließend bei 120°C 2 h getempert.

Tabelle 1 a

PP/PUR-Blockcopolymerisat

| Polypropylen | | Polyester | | MDI | PP |
|---|---|---|---|---|---|
| $M_n$ (g·mol$^{-1}$) | Menge g | Typ | Menge g | g | % |
| 1.900 | 120 | 1 | 1.160 | 164 | 8,3 |
| 2.630 | 1.500 | 4 | 903 | 471 | 52 |
| 1.770 | 240 | 1 | 2.341 | 328 | 8,5 |
| 1.850 | 360 | 1 | 2.291 | 348 | 12 |
| 1.060 | 360 | 1 | 2.060 | 380 | 12,9 |
| 2.600 | 450 | 1 | 2.310 | 343 | 14,5 |
| 2.085 | 240 | 1 | 1.887 | 328 | 9,8 |
| 2.740 | 750 | 2 | 2.150 | 320 | 23,3 |
| 750 | 240 | 1 | 1.485 | 328 | 11,7 |
| 850 | 360 | 3 | 2.620 | 600 | 10,0 |
| 3.800 | 240 | 1 | 3.300 | 450 | 6,0 |
| 3.800 | 240 | 1 | 2.430 | 330 | 8,0 |
| 1.055 | 450 | 3 | 1.640 | 421 | 17,9 |

Tabelle 1 b

MDI = Methandiphenyldiisocyanat

Bezeichnung der Polyester :

| | |
|---|---|
| Typ 1 : | Polyester aus Adipinsäure, Hexandiol, Neopentylglykol ; $M_n$ = 2.000 ; OH-Zahl : 56 |
| Typ 2 : | Polyester aus Adipinsäure und Butandiol $M_n$ = 2.250 ; OH-Zahl : 50 |
| Typ 3 : | 20 Teile Polyester Typ 1 1 Teil Bis(2-Hydroxyethoxy)benzol |
| Typ 4 : | 10 Teile Polyester Typ 2 1 Teil Butandiol |

$M_n$ = Zahlenmittleres Molekulargewicht (ermittelt über bekannte Methoden der Kopplung von Gelpermeationschromatographie und Viskosimetrie)

OH-Zahl = mg KOH/g Substanz

Beispiel 3

Analog Beispiel 2 mit dem Unterschied, daß zunächst nur die Hälfte der Gesamtmenge an Methandiphenyldiisocyanat zugegeben wird. Nach Zugabe des Polyesters wird ca. 1 h bei 180°C gerührt und anschließend der Rest Isocyanat zugegeben, rasch verrührt, ausgegossen und getempert.

B. Herstellung von PVC-PP/PU-Formmassen

Beispiel 4

Zur Prüfung der mechanischen Eigenschaften einer beliebigen erfindungsgemäßen Formmasse können Mischungen mit z.B. folgender Rezeptur hergestellt werden :

| | | |
|---|---|---|
| 80 - 30 | Teile | S-PVC (K-Wert 70) |
| 20 - 70 | Teile | PP/PU-Blockcopolymerisat |
| 2,5 | Teile | Ba/Zn-Stabilisator |
| 0,2 | Teile | E-Wachs (Ethylenglykol-bis-montansäureester) |

Tabelle 2 gibt die mechanischen Werte für eine Mischung unter Verwendung eines PP/PU-Blockcopolymerisats mit einem $M_n$ = 1.900 bestehend aus 120 Gew.-Teilen PP, 1.160 Gew.-Teilen Polyester aus Adipinsäure, Hexandiol, Neopentylglykol mit einem $M_n$ = 2.000 und einer OH-Zahl von 56 und 164 Gew.-Teilen MDI, das gemäß den Beispielen 1-3 hergestellt wurde, wieder.

Die Mischungen wurden 10 min bei 180°C auf einer Mischwalze homogenisiert und 10 min bei 185°C zu Platten gepreßt.

Tabelle 2

| PVC Gew.-Teile | PP/PU Gew.-Teile | Shore-Härte A/D DIN 53505 | Reißfestigkeit DIN 53455 MPa | Spannung bei 100 % Dehnung DIN 53455 MPa | Bruchdehnung DIN 53455 % | Weiterreißwiderstand DIN 53515 kN/m | Kältefestigkeit DIN 53372 °C |
|---|---|---|---|---|---|---|---|
| 80 | 20 | 98/73 | 40 | 28 | 140 | 173 | - 4 |
| 70 | 30 | 98/72 | 31 | 24 | 208 | 165 | -20 |
| 60 | 40 | 96/46 | 27 | 17 | 340 | 121 | -38 |
| 50 | 50 | 82/28 | 24 | 10 | 407 | 80 | -50 |
| 40 | 60 | 70/22 | 16 | 5 | 518 | 52 | <-50 |
| 30 | 70 | 57/10 | 8 | 3 | 738 | 37 | <-50 |

## Patentansprüche

1. Thermoplastische Formmassen aus PVC und einem Blockcopolymerisat, dadurch gekennzeichnet, daß das Blockcopolymerisat ein Poly-α-olefin/Polyurethan-Blockcopolymer (PAO/PU) ist und hergestellt wird aus

A. gegenüber Isocyanaten reaktionsfähigen, funktionalisierten Poly($C_2$-$C_{10}$-α-olefinen) mit einem Molekulargewicht $M_w$ von 1.000 bis 350.000,

B. organischen Di- oder Polyisocyanaten oder modifizierten Polyisocyanaten sowie Isocyanatprepolymeren,
sowie gegebenenfalls aus

C. gegenüber Isocyanaten reaktiven Zerewitinoffaktive Wasserstoffatome enthaltenden polyolen.
sowie gegebenenfalls aus

D. als Kettenverlängerer fungierenden organischen Di- oder Polyhydroxyverbindungen mit Molekulargewichten 62 bis 399 sowie di- und oligofunktionellen Aminen des Molgewichtsbereichs 32 bis 399 als Kettenverlängerungsmittel bzw. Vernetzer
wobei mindestens eine der Komponenten C. und D. enthalten sein muß.

2. Verwendung der Formmassen nach Anspruch 1 zur Herstellung von Formkörpern.

## Revendications

1. Matières à mouler thermoplastiques consistant en PVC et un copolymère séquencé, caractérisées en ce que ce dernier est un copolymère séquencé poly-α-oléfine/polyuréthanne (PAO/PU) qui a été préparé à partir de :

A. des poly-(α-oléfines en $C_2$-$C_{10}$) fonctionnalisées, réactives avec les isocyanates, ayant un poids moléculaire $M_w$ de 1000 à 350000,

B. des di- ou polyisocyanates organiques ou des polyisocyanates modifiés ou des prépolymères d'isocyanates,
et le cas échéant :

C. des polyols contenant des atomes d'hydrogène actif selon Zerewitinoff, réactifs avec les isocyanates,
et le cas échéant :

D. des composés di- ou polyhydroxylés organiques agissant comme agents d'allongement des chaînes, de poids moléculaire 62 à 399, ou des amines di- ou oligo-fonctionnelles de poids moléculaire 32 à 399, en tant qu'agents d'allongement des chaînes ou agents réticulants,
l'un au moins des composants C et D devant être présent.

2. Utilisation des matières à mouler selon la revendication 1 pour la fabrication de corps moulés.

## Claims

1. Thermoplastic moulding compounds of PVC and a block copolymer, characterized in that the block copolymer is a poly-α-olefin/polyurethane block copolymer (PAO/PU) and is prepared from

A. isocyanate-reactive functionalized poly($C_{2-10}$-α-olefins) having a molecular weight $M_w$ of 1,000 to 350,000,

B. organic di- or polyisocyanates or modified polyisocyanates and isocyanate prepolymers and, optionally,

C. isocyanate-reactive polyols containing zerewitinoffactive hydrogen atoms and, optionally,

D. organic di- or polyhydroxy compounds having molecular weights of 32 to 399 as chain-extending or crosslinking agents,

at least one of components C. and D. having to be present.

2. The use of the molding compounds claimed in claim 1 for the production of moldings.